# EUROPEAN PATENT APPLICATION

(11) **EP 4 644 261 A1**
(43) Date of publication of application: **05.11.2025**
(21) Application number: 22970053.9
(22) Date of filing: 27.12.2022
(51) Int. Cl.: B64U 10/13, B64U 101/40

(54) **WORK MACHINE**

(71) Applicant: Kubota Corporation, Osaka 556-8601 (JP)
(72) Inventor: SAKAGUCHI, Kazuo, Sakai-shi, Osaka 590-0908 (JP); FUJIWARA, Tetsuya, Sakai-shi, Osaka 590-0908 (JP)
(74) Representative: Cabinet Beau de Loménie
(86) International application number: PCT/JP2022/048215
(87) International publication number: WO 2024/142259

(57) **Abstract**

A work machine 1 includes a work apparatus 4 configured to perform work on a ground surface; an aerial vehicle 2 configured to fly by generating thrust; a connection mechanism 3 configured to connect the work apparatus 4 and the aerial vehicle 2; and a posture control unit configured to control at least one of the aerial vehicle 2 or the connection mechanism 3 to control a posture of the work apparatus 4.

## Description

### Technical Field

The present invention relates to a work machine including an aerial vehicle and a work apparatus.

### Background Art

In recent years, the efficiency of agricultural work using an aerial vehicle such as a drone has been considered. Patent Literature 1 discloses a support device for an aerial vehicle on which a spraying device that sprays pesticides or the like is mounted, as an example of agricultural work.

### Citation List

### Patent Literature

Patent Literature 1: International Publication No. 2020/137242

### Summary of Invention

### Technical Problem

In a case where an aerial vehicle is utilized for agricultural work, there is a demand for a work machine that can perform work appropriately.

### Solution to Problem

As means for solving the above-described problems, a work machine of the present invention includes a work apparatus configured to perform work on a ground surface; an aerial vehicle configured to fly by generating thrust; a connection mechanism configured to connect the work apparatus and the aerial vehicle; and a posture control unit configured to control at least one of the aerial vehicle or the connection mechanism to control a posture of the work apparatus.

According to the above-described feature, since the posture of the work apparatus is controlled by the control of at least one of the aerial vehicle or the connection mechanism, it is possible to appropriately perform work on the ground surface.

In the present invention, it is preferable that the connection mechanism may include a release mechanism configured to disconnect the aerial vehicle from the work apparatus while the aerial vehicle is flying.

According to the above-described feature, since the connection between the aerial vehicle and the work apparatus can be released during the flight, it is possible to reduce the possibility of a crash of the aerial vehicle. For example, in a case where it is difficult to control the posture of the aerial vehicle due to a gust or the like, it is possible to avoid a crash by reducing the load of the flight by the release of the connection.

In the present invention, it is preferable that the connection mechanism may include a buffer mechanism configured to buffer an impact from the work apparatus.

According to the above-described feature, since the impact from the work apparatus is cushioned, the possibility of damage to the connection device and the aerial vehicle is reduced.

In the present invention, it is preferable to further include an inclination acquisition unit configured to acquire inclination information indicating an inclination of the ground surface, and it is preferable that the posture control unit may be configured to control the posture of the work apparatus according to the inclination information acquired by the inclination acquisition unit.

According to the above-described feature, since the posture of the work apparatus is controlled according to the inclination of the ground surface, it is possible to more appropriately perform work on the ground surface.

In the present invention, it is preferable that the connection mechanism may include a change mechanism configured to change a distance between the aerial vehicle and the work apparatus, and the posture control unit may be configured to control the posture of the work apparatus by operating the change mechanism according to the inclination information acquired by the inclination acquisition unit.

According to the above-described feature, since the change mechanism is operated according to the inclination of the ground surface and the posture of the work apparatus is controlled, it is possible to more appropriately perform the work on the ground surface.

In the present invention, it is preferable that the work apparatus may include a thrust generation device configured to press the work apparatus against the ground surface.

According to the above-described feature, since the work apparatus is pressed against the ground surface by the thrust generation device, it is possible to more appropriately perform work on the ground surface.

In the present invention, it is preferable to further include an inclination acquisition unit configured to acquire inclination information indicating an inclination of the ground surface; and a thrust control unit configured to control the thrust generation device according to the inclination information acquired by the inclination acquisition unit.

According to the above-described feature, since the thrust generation device is controlled according to the inclination of the ground surface, the work apparatus is further appropriately pressed against the ground surface, making it possible to appropriately perform work on the ground surface.

In the present invention, it is preferable that a direction of thrust generated by the thrust generation device may be different from a direction of the thrust of the aerial vehicle.

According to the above-described feature, the work apparatus can be pressed by the thrust generation device in a direction in which the work apparatus cannot be pressed by the thrust of the aerial vehicle. Accordingly, it is possible to more appropriately perform work on the ground surface.

In the present invention, it is preferable that the thrust generation device may include a main propeller configured to be driven to generate thrust, and a protective member around the main propeller.

According to the above-described feature, since the protective member is disposed around the propeller, the damage to the propeller is suppressed.

In the present invention, it is preferable that the thrust generation device may include a main propeller configured to be driven to generate thrust, and a sub-propeller rotatable by receiving at least a part of downwash from the aerial vehicle, and the thrust generation device may be configured to use energy received by the sub-propeller from the downwash to drive the main propeller.

According to the above-described feature, since the downwash from the aerial vehicle is utilized to drive the main propeller of the thrust generation device, the energy efficiency can be improved.

### Brief Description of Drawings

Fig. 1 is a side view illustrating the outline of a work machine;
Fig. 2 is a block diagram illustrating a configuration related to the control of the work machine;
Fig. 3 is a side view illustrating the outline of the work machine; and
Fig. 4 is a block diagram illustrating a configuration related to the control of the work machine.

### Description of Embodiments

Hereinafter, a work machine according to the present invention will be described with reference to the drawings. The present invention is not limited to the following embodiments, and various modifications can be made without departing from the scope of the present invention.

### [First Embodiment]

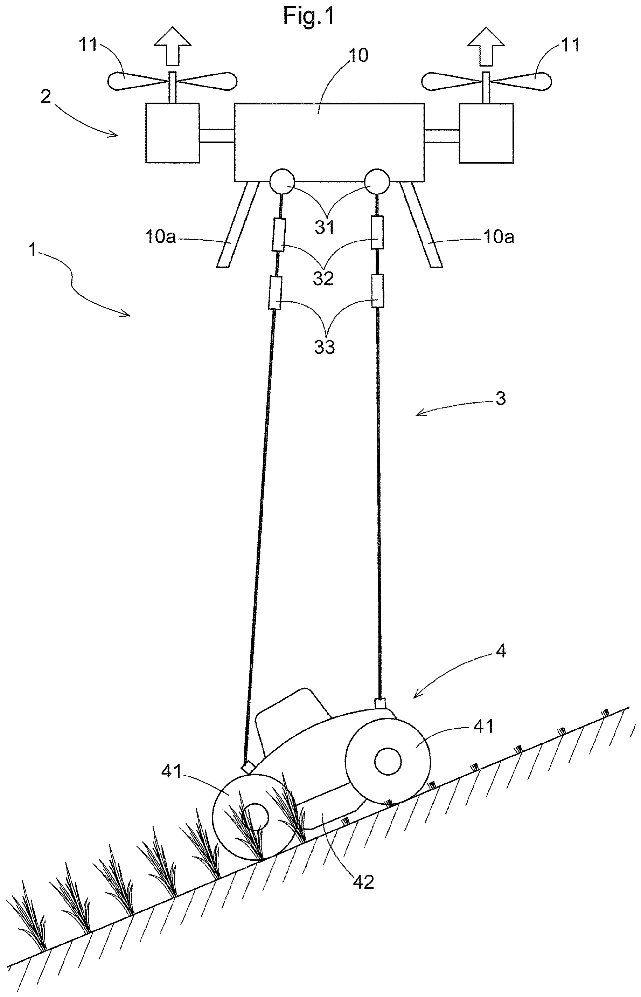

Fig. 1 illustrates a work machine 1. The work machine 1 is configured to be capable of executing agricultural work while flying.

The work machine 1 includes an aerial vehicle 2, a connection mechanism 3, and a work apparatus 4.

### [Aerial Vehicle]

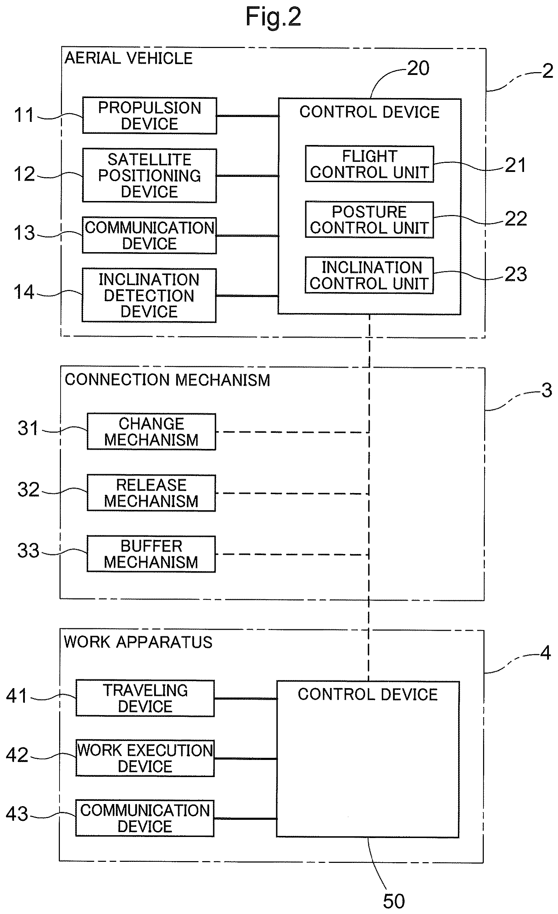

The aerial vehicle 2 generates thrust to fly. As illustrated in Figs. 1 and 2, an airframe 10 of the aerial vehicle 2 includes legs 10a for landing, a propulsion device 11, a satellite positioning device 12, a communication device 13, an inclination detection device 14, and a control device 20.

The propulsion device 11 is a propeller that is driven and rotated. A drive source of the propulsion device 11 may be an engine or an electric motor. The number of propulsion devices 11 is preferably three or more, and may be four, five, six, or seven or more. The airframe 10 may include a plurality of types of propulsion devices 11 having different sizes and outputs.

The satellite positioning device 12 receives a positioning signal from an artificial satellite used in a global navigation satellite system (GNSS, for example, GPS, QZSS, Galileo, GLONASS, BeiDou, or the like). Then, the satellite positioning device 12 generates positioning data indicating the own position of the work machine 1 based on the received positioning signal.

The communication device 13 communicates with a remote controller held by an operator or a higher-level farming system. In addition, the communication device 13 communicates with the communication device 43 of the work apparatus 4.

The inclination detection device 14 is a sensor that detects the inclination of the ground surface. The inclination detection device 14 is LiDAR or a camera, for example. The inclination detection device may be an IMU sensor or a device that physically brings a probe into contact with the ground surface to detect the inclination. The inclination detection device 14 detects the inclination of the ground surface on which the work apparatus 4 performs work, and generates data indicating the inclination of the ground surface.

The control device 20 controls the operations of the aerial vehicle 2, the connection mechanism 3, and the work apparatus 4. That is, the control device 20 controls the overall operation of the work machine 1.

The control device 20 includes a memory (such as an HDD or a non-volatile RAM, not illustrated) that stores a program corresponding to functional modules described below, and a CPU (not illustrated) that executes the program. The functions of each functional unit are realized by executing the program by the CPU. That is, the control device 20 includes a non-transitory recording medium that stores the program.

The control device 20 may be configured by one or a plurality of ECUs mounted on the aerial vehicle 2. In addition, the control device 20 may be configured by one or a plurality of ECUs mounted on the work machine 1.

The control device 20 includes a flight control unit 21, a posture control unit 22, and an inclination acquisition unit 23 as the functional modules. The functions and operations of these functional modules will be described below.

### [Connection Mechanism]

The connection mechanism 3 connects the work apparatus 4 and the aerial vehicle 2. The connection mechanism 3 includes a change mechanism 31, a release mechanism 32, and a buffer mechanism 33. In the present embodiment, the change mechanism 31, the release mechanism 32, and the buffer mechanism 33 are connected by flexible wires. Four wires connect the work apparatus 4 and the aerial vehicle 2. In other words, an upper end of the connection mechanism 3 is connected to the aerial vehicle 2, and a lower end of the connection mechanism 3 is connected to the work apparatus 4.

The connection mechanism 3 may be operated by power (power from a battery or power generated by an engine) supplied from the aerial vehicle 2. The connection mechanism 3 may be operated by power (power from a battery or power generated by an engine) supplied from the work apparatus 4.

The change mechanism 31 changes the posture of the work apparatus 4 with respect to the aerial vehicle 2 by changing the total length (that is, the distance between the aerial vehicle 2 and the work apparatus 4) of the connection mechanism 3. Specifically, the change mechanism 31 is a winch that winds and unwinds the wires. The change mechanism 31 is attached to a lower portion of the airframe 10 of the aerial vehicle 2.

The release mechanism 32 releases the connection between the aerial vehicle 2 and the work apparatus 4 during the flight of the aerial vehicle 2. Specifically, the release mechanism 32 is a mechanism that can be separated into an upper portion and a lower portion by the operation of an electromagnet, a solenoid, an actuator, or the like controlled by the control device 20. The release mechanism 32 may be a mechanism that cuts a wire with a blade. The release mechanism 32 is provided in an intermediate portion of the connection mechanism 3.

The buffer mechanism 33 buffers the impact from the work apparatus 4. Specifically, the buffer mechanism 33 is a mechanism that attenuates a force received by the connection mechanism 3 from the work apparatus 4. For example, the buffer mechanism 33 is a mechanism that can be deformed according to the force received from the work apparatus 4, and is an elastic member such as a spring or a damper.

### [Work Apparatus]

The work apparatus 4 is an apparatus that can perform work on the ground surface. In the present embodiment, the work apparatus 4 is a mower. The work apparatus 4 may be a cultivator, a seedling planter, a seeder, a chemical sprayer, a harvester, a granular chemical feeder, a fertilizer applicator, or the like. In the example of Fig. 1, the ground surface is inclined, but work may be performed on a horizontal ground surface.

In the present embodiment, the work apparatus 4 includes a traveling device 41, a work execution device 42, a communication device 43, and a control device 50.

The traveling device 41 is a device that causes the work apparatus 4 to travel in contact with the ground surface. In the present embodiment, the traveling device 41 is a driven wheel. The traveling device 41 may be a crawler-type traveling device or a leg-type traveling device.

The work execution device 42 is a device that actually performs work on the ground surface. In the present embodiment, the work execution device 42 is a cutting blade. The work execution device 42 may be a cultivating device, a seedling planting device, a seeding device, a spraying device (a chemical, a granular chemical, or a fertilizer), or a harvesting device.

The communication device 43 communicates with the communication device 13 of the aerial vehicle 2.

The control device 50 controls the operation of the work apparatus 4.

The control device 50 includes a memory (such as an HDD or a non-volatile RAM, not illustrated) that stores a program corresponding to the functional modules, and a CPU (not illustrated) that executes the program. The functions of each functional unit are realized by executing the program by the CPU. That is, the control device 50 includes a non-transitory recording medium that stores a program.

The control device 50 may be configured by one or a plurality of ECUs mounted on the work apparatus 4.

The work apparatus 4 may include an engine, a fuel tank, and a battery as a power source. The work apparatus 4 may be operated by a battery mounted on the work apparatus 4 or may be operated by power supplied from the aerial vehicle 2. Examples of methods for supplying power from the aerial vehicle 2 to the work apparatus 4 include power supply by an electric wire provided along the connection mechanism 3, and wireless power supply, or the like.

### [Control of Work Machine]

As illustrated in Fig. 2, the propulsion device 11, the satellite positioning device 12, the communication device 13, the inclination detection device 14, the change mechanism 31, the release mechanism 32, the buffer mechanism 33, and the control device 50 of the work apparatus 4 are connected to the control device 20 of the aerial vehicle 2. The control device 20 controls these devices to cause the work machine 1 to execute flight and work (agricultural work or the like). In the present embodiment, the work is mowing the ground surface.

The flight control unit 21 controls the propulsion device 11 to cause the work machine 1 to fly. The flight control unit 21 may cause the work machine 1 to fly according to an operation received by the remote controller held by the operator. The flight control unit 21 may cause the work machine 1 to fly according to a flight plan stored in advance in the memory. The flight control unit 21 may cause the work machine 1 to fly based on the flight plan received from the higher-level farming system.

The posture control unit 22 controls at least one of the aerial vehicle 2 and the connection mechanism 3 to control the posture of the work apparatus 4. Hereinafter, this will be described in details.

The posture control unit 22 controls the aerial vehicle 2 to control the posture of the work apparatus 4. In a case where the inclination of the aerial vehicle 2 with respect to the ground surface changes without changing the length of the connection mechanism 3, the inclination of the work apparatus 4 with respect to the ground surface also changes. That is, the posture control unit 22 controls the posture (the inclination with respect to the ground surface) of the work apparatus 4 by controlling the inclination of the aerial vehicle 2 with respect to the ground surface.

The posture control unit 22 controls the connection mechanism 3 to control the posture of the work apparatus 4. In a case where the length (the length of some of the plurality of wires) of the connection mechanism 3 changes in a state in which the inclination of the aerial vehicle 2 with respect to the ground surface is constant, the inclination of the work apparatus 4 with respect to the ground surface changes. That is, the posture control unit 22 controls the posture (inclination with respect to the ground surface) of the work apparatus 4 by operating the change mechanism 31 to control the length of the connection mechanism 3.

The posture control unit 22 may control only one of the aerial vehicle 2 or the connection mechanism 3, or may control both the aerial vehicle 2 and the connection mechanism 3.

The inclination acquisition unit 23 acquires inclination information indicating the inclination of the ground surface. In the present embodiment, the inclination acquisition unit 23 acquires the inclination information indicating the inclination of the ground surface based on the output of the inclination detection device 14.

The inclination acquisition unit 23 may acquire the inclination information indicating the inclination of the ground surface regardless of the output of the inclination detection device 14. For example, the inclination detection device 14 may acquire the inclination information indicating the inclination of the ground surface based on positioning data output by the satellite positioning device 12 and map data indicating the inclination of the ground surface. In this case, the work machine 1 may not include the inclination detection device 14.

The posture control unit 22 may be configured to control the posture of the work apparatus 4 according to the inclination information acquired by the inclination acquisition unit 23. Specifically, the posture control unit 22 controls the posture of the work apparatus 4 such that the posture of the work apparatus 4 with respect to the ground surface is suitable for work. For example, the posture control unit 22 controls the posture of the work apparatus 4 such that the posture of the work apparatus 4 is parallel to the ground surface.

The posture control unit 22 may control the posture of the work apparatus 4 such that the distance between the ground surface and the work apparatus 4 is suitable for work.

The posture control unit 22 may perform control as follows. A sensor (the inclination detection device 14 may also be used) such as a camera or a LiDAR provided in the aerial vehicle 2 detects the work result of the work apparatus 4. The posture control unit 22 controls the posture of the work apparatus 4 according to the work result detected by the sensor. For example, the posture control unit 22 controls the posture of the work apparatus 4 such that the work result is improved in a case where the work result is worse than a preset reference.

An example of the work result will be described. In a case where the work apparatus 4 is a mower, the work result is the height of remaining cut grass.

In a case where the work apparatus 4 is a seedling planter, the work result is planting depth, or the presence or absence of missing stalks (missing seedlings).

In a case where the work apparatus 4 is a seeder, a fertilizer applicator, a chemical sprayer, or a granular chemical feeder, the work result is a supply position, the degree of exposure of supplied seeds, fertilizer, chemical, and the like from the soil surface, a spraying range, and the like.

In a case where the work apparatus 4 is a harvester, the work result is a harvest residue (presence or absence of unharvested crops) or the like.

### [Second Embodiment]

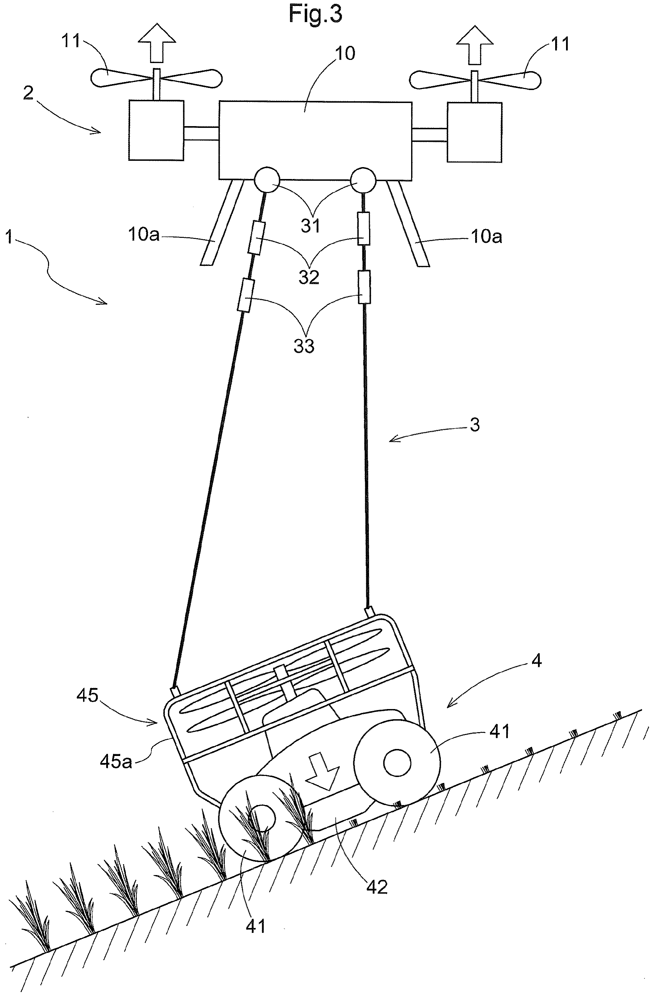

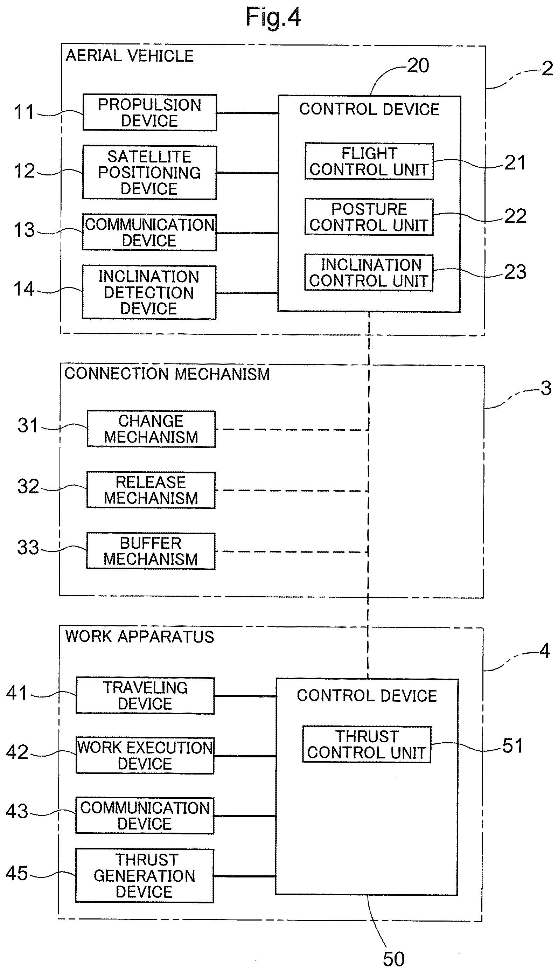

Another embodiment of the present invention will be described with reference to Figs. 3 and 4. In the following description, the same reference numerals are assigned to the same components as those in the above-described embodiment, and the description thereof may be omitted.

In the work machine 1 of the present embodiment, the work apparatus 4 includes a thrust generation device 45. The control device 50 includes a thrust control unit 51.

The thrust generation device 45 is a device that generates thrust to press the work apparatus 4 against the ground surface. In the present embodiment, the thrust generation device 45 is a propeller (an example of a "main propeller") that is driven and rotated. The number of thrust generation devices 45 may be two as in the illustrated example, or may be one or three or more. The plurality of thrust generation devices 45 may be disposed coaxially as in the illustrated example, or may be disposed on different rotation axes. The work apparatus 4 may include a plurality of types of thrust generation devices 45 having different sizes and outputs.

The thrust generation device 45 may be driven by power of a PTO shaft branching from a drive shaft from the engine of the work apparatus 4. In this case, a clutch is provided between the engine and the thrust generation device 45, and the drive of the thrust generation device 45 is turned on and off.

The thrust generation device 45 may be driven by an electric motor. In this case, examples of methods for supplying power to the electric motor include wired power supply from the work apparatus 4, wired power supply from the aerial vehicle 2 by an electric wire provided along the connection mechanism 3, and wireless power supply from the aerial vehicle 2.

In the present embodiment, the direction of the thrust generated by the thrust generation device 45 is different from the direction of the thrust of the aerial vehicle 2. As illustrated by a white arrow in Fig. 3, the direction of the thrust of the aerial vehicle 2 is upward (upward in an up-down direction of the airframe 10 of the aerial vehicle 2). The direction of the thrust of the thrust generation device 45 is downward (downward in the up-down direction of the airframe of the work apparatus 4). The thrust generation device 45 may be configured such that the direction of the thrust can be changed. For example, the rotation axis of the thrust generation device 45 may be swingable.

In addition, the work apparatus 4 includes a protective body 45a. The protective body 45a is disposed around the propeller which is the thrust generation device 45. In the present embodiment, the protective body 45a is a basket-shaped member formed by bending a rod-shaped member. The protective body 45a may include a mesh-shaped member or may include a plate-shaped member. The protective body 45a may cover a part of the thrust generation device 45. It is preferable that the protective body 45a covers the entire side surface of the thrust generation device 45. It is preferable that the protective body 45a covers the entire upper surface of the thrust generation device 45. It is preferable that the protective body 45a covers the entire lower surface of the thrust generation device 45.

The thrust control unit 51 controls the thrust generation device 45 according to the inclination information acquired by the inclination acquisition unit 23. For example, the thrust control unit 51 controls the thrust control unit 51 such that the thrust increases as the inclination of the ground surface increases. The thrust control unit 51 may stop the thrust generation device 45 in a case where the inclination of the ground surface is smaller than a predetermined threshold value.

The thrust control unit 51 may be able to control the direction of the thrust generated by the thrust generation device 45. For example, the thrust control unit 51 may control the thrust generation device 45 such that the direction of the thrust generated by the thrust generation device 45 is perpendicular to the ground surface based on the inclination information acquired by the inclination acquisition unit 23.

### [Modification Example of Second Embodiment]

The thrust generation device 45 may include a sub-propeller (not illustrated) that receives at least a part of the downwash from the aerial vehicle 2 and rotates in addition to the propeller (main propeller) that is driven to generate the thrust. The thrust generation device 45 may be configured to use the energy received by the sub-propeller from the downwash to drive the main propeller. In this case, it is preferable that the shape of the sub-propeller is a shape that is easily rotated by receiving the downwash from the aerial vehicle 2 located above the work apparatus 4. For example, a generator may be connected to the sub-propeller, and the power generated by the generator may be used for driving the main propeller.

### [Other Embodiments]

The present invention is not limited to the configurations exemplified in the above-described embodiments. Hereinafter, representative embodiments of the present invention will be exemplified.
(1) In the above-described embodiments, an example in which the connection mechanism 3 includes the flexible wires has been described. The entire connection mechanism 3 may be configured by rigid bodies. In this case, the change mechanism 31 may be a mechanism that is extended and retracted to change the length or a mechanism that bends to change a connection angle.
(2) The connection mechanism 3 may not include the release mechanism 32.
(3) The connection mechanism 3 may not include the buffer mechanism 33.
(4) The control device 20 may not include the inclination acquisition unit 23.
(5) The work apparatus 4 may not include the protective body 45a.
(6) The work apparatus 4 may be replaceable with substitutes capable of executing different types of work.
(7) The form of the aerial vehicle 2 may be different from that of the above-described embodiments. For example, the propulsion device 11 includes a main rotor and a sub-rotor. The main rotor may be one or two or more. The number of sub-rotors may be one or two or more. The main rotor is driven by an engine, and the sub-rotor is driven by an electric motor. The aerial vehicle 2 may include a battery that stores the power generated by the engine.

### Industrial Applicability

The present invention can be applied to a work machine that executes work while flying.

### Description of Reference Numerals

1: work machine
2: aerial vehicle
3: connection mechanism
4: work apparatus
22: posture control unit
23: inclination acquisition unit
32: release mechanism
33: buffer mechanism
45: thrust generation device
51: thrust control unit

## Claims

1. A work machine, comprising:
a work apparatus configured to perform work on a ground surface;
an aerial vehicle configured to fly by generating thrust;
a connection mechanism configured to connect the work apparatus and the aerial vehicle; and
a posture control unit configured to control at least one of the aerial vehicle or the connection mechanism to control a posture of the work apparatus.

2. The work machine according to claim 1, wherein the connection mechanism includes a release mechanism configured to disconnect the aerial vehicle from the work apparatus while the aerial vehicle is flying.

3. The work machine according to claim 1 or 2, wherein the connection mechanism includes a buffer mechanism configured to buffer an impact from the work apparatus.

4. The work machine according to any one of claims 1 to 3, further comprising:
an inclination acquisition unit configured to acquire inclination information indicating an inclination of the ground surface,
wherein the posture control unit is configured to control the posture of the work apparatus according to the inclination information acquired by the inclination acquisition unit.

5. The work machine according to claim 4,
wherein the connection mechanism includes a change mechanism configured to change a distance between the aerial vehicle and the work apparatus, and
the posture control unit is configured to control the posture of the work apparatus by operating the change mechanism according to the inclination information acquired by the inclination acquisition unit.

6. The work machine according to any one of claims 1 to 5, wherein the work apparatus includes a thrust generation device configured to press the work apparatus against the ground surface.

7. The work machine according to claim 6, further comprising:
an inclination acquisition unit configured to acquire inclination information indicating an inclination of the ground surface; and
a thrust control unit configured to control the thrust generation device according to the inclination information acquired by the inclination acquisition unit.

8. The work machine according to claim 6 or 7, wherein a direction of thrust generated by the thrust generation device is different from a direction of the thrust of the aerial vehicle.

9. The work machine according to any one of claims 6 to 8, wherein the thrust generation device includes a main propeller configured to be driven to generate thrust, and a protective member around the main propeller.

10. The work machine according to any one of claims 6 to 9,
wherein the thrust generation device includes a main propeller configured to be driven to generate thrust, and a sub-propeller rotatable by receiving at least a part of downwash from the aerial vehicle, and
the thrust generation device is configured to use energy received by the sub-propeller from the downwash to drive the main propeller.
